## Europäisches Patentamt

## European Patent Office

## Office européen des brevets

(11) Numéro de publication: **0 134 163**
**B1**

(12) **FASCICULE DE BREVET EUROPEEN**

(45) Date de publication du fascicule du brevet:
**01.04.87**

(51) Int. Cl.⁴: **H 02 G 3/08**

(21) Numéro de dépôt: **84401344.1**

(22) Date de dépôt: **26.06.84**

(54) **Traversée coaxiale d'une paroi métallique.**

(30) Priorité: **08.07.83 FR 8311433**

(43) Date de publication de la demande:
**13.03.85 Bulletin 85/11**

(45) Mention de la délivrance du brevet:
**01.04.87 Bulletin 87/14**

(84) Etats contractants désignés:
**AT BE CH DE GB IT LI LU NL SE**

(56) Documents cités:
**CH - A - 138 419**
**DE - A - 2 522 898**
**DE - C - 460 430**
**US - A - 2 131 165**
**US - A - 2 648 827**
**US - A - 3 743 748**
**US - A - 3 851 846**

(73) Titulaire: **OREGA ELECTRONIQUE & MECANIQUE,**
**74, rue du Surmelin, F-75020 Paris (FR)**

(72) Inventeur: **Froment, Gérard, THOMSON-CSF**
**SCPI 173, bld Haussmann, F-75379 Paris Cedex 08 (FR)**

(74) Mandataire: **Grynwald, Albert et al, THOMSON-CSF**
**SCPI 19, avenue de Messine, F-75008 Paris (FR)**

**Description**

L'invention concerne une traversée coaxiale d'une paroi métallique permettant la transmission d'un signal d'un côté de la paroi à son autre côté, par l'intermédiaire de ce câble, la tresse ou conducteur extérieur du câble coaxial étant en contact électrique avec la paroi.

Les traversées coaxiales ou passages coaxiaux à travers une paroi métallique qui peut être celle d'un blindage contenant notamment les parties haute- ou radio-fréquence (VHF et/ou UHF, par exemple) d'un récepteur d'ondes électromagnétiques diffusées, sont actuellement réalisées à l'aide d'une ou plusieurs pièces permettant de coincer, ou de sertir la tresse constituant le conducteur extérieur du câble coaxial et de la souder ensuite, directement ou indirectement, sur la paroi. Il existe différents dispositifs du type douille, collier ou manchon en matériau conducteur, permettant de sertir la tresse retroussée sur l'enveloppe isolante extérieure, respectivement composés d'une ou de plusieurs pièces devant être déformées par des pinces ou serrés par vissage, qui exigent un montage sur la paroi soit par soudure, soit par une bride vissée (DE-A-2 522 898) qui constitue également une pièce supplémentaire.

La présente invention permet d'éliminer toute nécessité de pièce supplémentaire, tout en assurant une tenue mécanique (en traction) et un blindage supérieurs ou comparables aux solutions antérieures, plus coûteuses.

L'invention concerne une traversée ou passage pour câble coaxial à travers une paroi métallique, la tresse métallique du câble étant connectée électriquement à la paroi, caractérisé en ce que la paroi comporte des déformations délimitant un volume sensiblement cylindrique logeant la tresse, cette dernière étant soudée aux déformations. De préférence ces déformations sont au moins au nombre de deux et sont successives, l'une étant d'un côté de la paroi et l'autre du côté opposé de cette paroi.

Pour améliorer encore la tenue mécanique on prévoit, dans une réalisation avantageuse, des secondes déformations qui reçoivent l'enveloppe isolante du câble qui est voisine de la tresse soudée aux premières déformations. Dans ce cas ces secondes déformations délimitent par exemple un volume cylindrique de même axe que le volume délimité par les premières déformations.

Il est particulièrement avantageux que les déformations soient des découpes et emboutis de la paroi métallique.

L'invention sera mieux comprise et d'autres de ses caractéristiques et avantages ressortiront de la description qui suit et des dessins annexés s'y rapportant, donnés à titre d'exemple, sur lesquels:

les figures 1, 2, 3 et 4 représentent respectivement une coupe latérale en élévation, une vue en plan, une vue frontale et une vue en perspective d'une traversée ou d'un passage pour câble coaxial, pratiqué dans la paroi métallique;

la figure 5 représente un bout de câble coaxial préparé pour être inséré dans une traversée des figures 1 à 3 et pour constituer une terminaison d'entrée d'un circuit électronique; et

la figure 6 montre le bout du câble de la figure 4 inséré dans la traversée des figures 1 à 3, représentée en coupe.

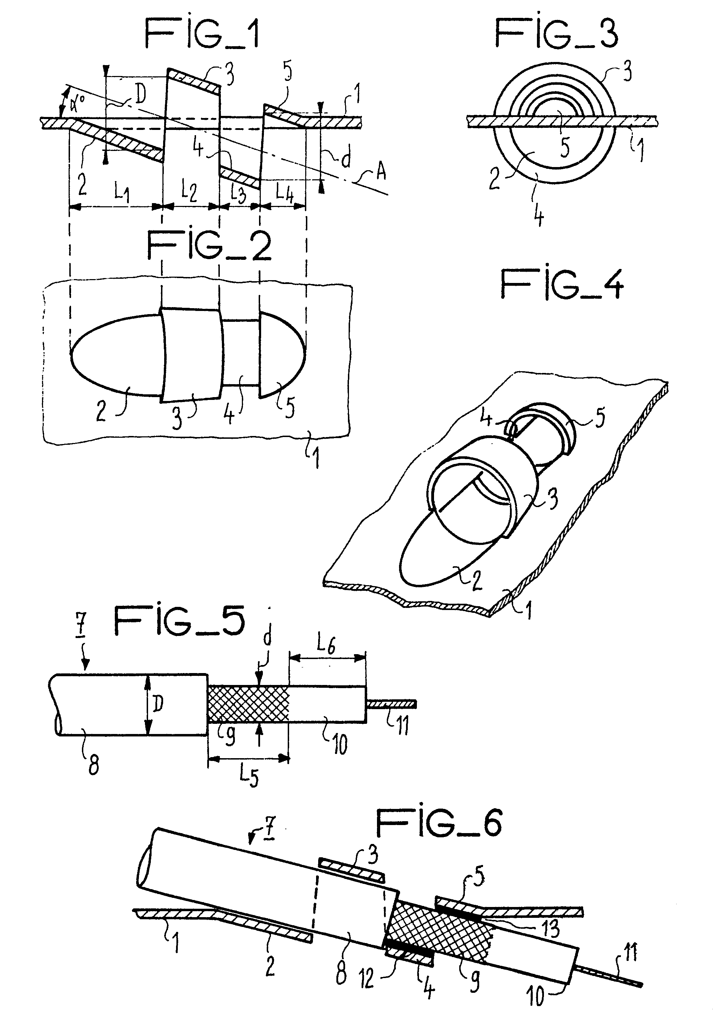

Sur les figures 1 à 4, on a représenté par le repère 1 une partie de la paroi métallique qui doit être traversée par un câble coaxial de l'extérieur (représenté par le haut) vers l'intérieur (représenté par le bas) d'un boîtier métallique, par exemple, formant blindage. La traversée ou le passage selon l'invention, est composé de quatre éléments obtenus par découpage et emboutissage à l'aide d'un ou plusieurs outils de formes adaptées montés sur une presse à emboutir par exemple. Le découpage faisant partie de la première opération, l'emboutissage peut être effectué en deux étapes.

De gauche à droite (ou de l'avant vers l'arrière) on y voit un premier creux ou saillie vers l'intérieur (le bas) 2 pénétrant graduellement vers le bas de la paroi 1 représentant l'intérieur du boîtier et constituant une dépouille ou gouttière de forme cylindrique inclinée d'un angle $\alpha$ par rapport au plan de la paroi 1. Le rayon de la surface cylindrique descendante, mesuré par rapport à un axe A qui traverse cette dernière sous le même angle $\alpha$, est choisi sensiblement égal à la moitié du diamètre extérieur D du câble coaxial entier (enveloppe isolante incluse). Ce premier creux 2 est suivi d'une première saillie vers le haut en forme de voûte inclinée 3, dont le rayon intérieur par rapport à l'axe incliné A est également D/2. Cette voûte 3 forme un creux vers le haut de telle sorte que le prolongement fictif du premier creux 2 formerait avec elle un trou cylindrique sensiblement de diamètre D.

La voûte 3 est suivie d'un second creux 4 en forme de gouttière inclinée, formant une saillie vers le bas et définissant une surface sensiblement semicylindrique par rapport à l'axe incliné A, de diamètre intérieur sensiblement égale à d/2, où d est inférieur à D, comme il sera expliqué plus loin. La quatrième partie ou section 5 de la traversée ou du passage pour le câble coaxial, est constituée par une seconde saillie vers le haut, de forme analogue mais de position inversée par rapport au premier creux 2. Cette seconde saillie 5 comporte une surface intérieure qui aboutit à la face inférieure de la paroi 1 et qui présente un rayon de courbure par rapport à l'axe A sensiblement égal à d/2.

Les longueurs respectives L1, L2, L3 et L4 des différentes parties ou sections du passage ou de la traversée sont choisies, ainsi que l'angle d'inclinaison $\alpha$ de son axe A, en fonction des diamètres du câble coaxial. La longueur L1 de la première section 2 est, par exemple, choisie entre 1,25 et 1,75 D, celle L2 de la seconde 3 entre 0,8 et 1,2 D. Ces longueurs L1 et L2 sont chacune au moins égales au diamètre D. Les troisième 4 et quatrième 5 sections du passage ont des longueurs L3, L4 comparables comprises entre 0,8 et 1,2 d, où d correspond au diamètre extérieur de la tresse, de telle sorte que la somme de leurs longueurs respectives (L3 + L4) soit approximativement égale au double de ce diamètre d, par exemple. L'angle d'inclinaison $\alpha$ est de préférence choisi au plus égal à 15°. Cet angle $\alpha$ est, de préférence, compris entre 10° et 15°.

Ceci donne pour un câble coaxial du type PPD de 3,6 mm de diamètre, par exemple, L1 = 6 mm, L2 = 4 mm, L3 = 3 mm environ, ce qui donnen longueur totale L = L1 + L2 + L3 + L4 = 16 mm environ. La largeur de la traversée est au plus de quelques mm supérieure au diamètre D.

Si l'angle d'inclinaison α diminue, la longueur totale et celle des sections 2 à 5 ou leur nombre augmente. Il est toutefois avantageux d'en avoir au moins quatre dont les deux dernières 4, 5 servent à la soudure de la tresse et en au moins deux points.

La figure 5 montre la manière de préparer le bout du câble coaxial 7 à insérer dans le passage ou la traversée suivant l'invention. On dénude d'abord l'âme ou le conducteur central 11 (en fils de cuivre torsadés, par exemple) sur une certaine longueur, pour l'étamer (à la soudure, par exemple). On enlève ensuite l'enveloppe isolante extérieure 8 sur une longueur prédéterminée, supérieure à la somme des longueurs L3 et L4 (L3 + L4 = 6 mm environ), suivant la distance du point d'entrée (de soudure) de l'âme 11 sur une broche ou cosse métallique et fixe. On relève par exemple une longueur L5 + L6 = 2 (L3 + L4) (non représentée) isolée du boîtier de blindage de l'enveloppe isolante 8. Par la suite, on raccourcit la tresse métallique 9 (en fils de cuivre tressés, par exemple) qui constitue le conducteur extérieur, pour que sa longueur L5 soit sensiblement égale à celle L3 + L4 des deux sections de petit rayon (d/2). Ensuite la tresse 9 est également étamée. On obtient donc en bout, une longueur d'âme 11 nue étamée, une longueur L6 d'isolant intérieur 10 nu et une longueur L5 de ce dernier recouvert de la tresse 9 étamée.

Le bout de câble ainsi préparé de la figure 5, est inséré dans le passage comme indiqué sur la figure 6 qui montre l'assemblage de ces éléments, en vue d'amener un signal HF à l'intérieur du boîtier.

La première paire de sections 2 et 3, c'est-à-dire le premier creux 2 et la voûte 3, servent à contenir l'enveloppe isolante extérieure 8 et à guider le bout de câble, lors de son insertion. La dernière paire de sections 4 et 5, c'est-à-dire la gouttière inclinée 4 et la seconde saillie vers le haut 5, entourent la longueur L5 de tresse 9 étamée. La paroi l'étant également réalisée en tôle étamée (de cuivre, par exemple), la tresse 9 est soudée à l'aide d'une soudure étain-plomb classique aux surfaces en regard de ces sections 4, 5.

Il est à noter ici que le diamètre réduit (d) de la gouttière 4 permet d'amener l'extrémité de l'enveloppe isolante 8 en butée, afin d'obtenir un positionnement relativement précis du bout du câble 7.

## Revendications

1. Traversée ou passage pour câble coaxial (7) à travers une paroi métallique (1), la tresse métallique (9) du câble étant connectée électriquement à la paroi, caractérisé en ce que la paroi comporte des déformations (4, 5) délimitant un volume sensiblement cylindrique logeant la tresse (9), cette dernière étant soudée à ces déformations.

2. Traversée ou passage selon la revendication 1, caractérisé en ce que la paroi métallique (1) comporte d'autres déformations (2, 3) recevant l'enveloppe isolante (8) du câble voisine de la tresse (9) soudée aux déformations (4, 5) logeant ladite tresse.

3. Traversée ou passage selon la revendication 2, caractérisé en ce que les déformations (2, 3) de la paroi (1) qui logent l'enveloppe isolante (8) délimitent un volume cylindrique de même axe (A) que le volume délimité par les déformations (4, 5) logeant la tresse métallique (9).

4. Traversée ou passage selon la revendication 3, caractérisé en ce que l'axe (A) commun au volume cylindrique logeant respectivement la tresse soudée et l'enveloppe isolante forme avec la paroi un angle (α) au plus égal à 15°.

5. Traversée ou passage suivant l'une des revendications précédentes, caractérisé en ce que les premières déformations (4, 5) sont au nombre de deux, la longueur (L3, L4) de chacune d'elles étant sensiblement égale au diamètre de la tresse.

6. Traversée ou passage selon l'une quelconque des revendications précédentes, caractérisé en ce que les secondes déformations (2, 3) recevant l'enveloppe isolante sont au nombre de deux et en ce que la longueur (L1, L2) de chacune de ces déformations est au moins égale au diamètre extérieur de ladite enveloppe isolante (8).

7. Traversée ou passage selon l'une quelconque des revendications 1 à 6, caractérisé en ce que les déformations sont des découpes et emboutis de la paroi métallique.

8. Traversée ou passage selon l'une quelconque des revendications précédentes, caractérisé en ce que l'extrémité de l'enveloppe isolante (8) est en butée contre une déformation (4) de la paroi formant logement pour la tresse métallique (9).

9. Application de la traversée ou du passage selon l'une quelconque des revendications précédentes au passage d'un câble coaxial à travers le blindage métallique contenant la partie haute fréquence d'un récepteur d'ondes électromagnétiques diffusées.

## Patentansprüche

1. Durchführung oder Durchquerung für ein Koaxialkabel (7) durch eine metallische Wand (1), wobei das metallische Geflecht (9) des Kabels elektrisch an die Wand angeschlossen ist, dadurch gekennzeichnet, dass die Wand Deformierungen (4, 5) aufweist, die ein im wesentlichen zylindrisches Volumen begrenzen, worin das Geflecht (9) aufgenommen ist, welches an diese Deformierungen angelötet ist.

2. Durchführung oder Durchquerung nach Anspruch 1, dadurch gekennzeichnet, dass die metallische Wand (1) weitere Deformierungen (2, 3) aufweist, welche die Isolierhülle (8) des Kabels in der Nähe des Geflechts (9) aufnehmen, das an die dieses Geflecht aufnehmenden Deformierungen (4, 5) angelötet ist.

3. Durchführung oder Durchquerung nach Anspruch 2, dadurch gekennzeichnet, dass die Deformierungen (2, 3) der Wand (1), welche die Isolierhülle (8) aufnehmen, ein zylindrisches Volumen mit derselben Achse (A) wie das Volumen begrenzen, welches durch die Deformierungen (4, 5) begrenzt ist, welche des metallische Geflecht (9) aufnehmen.

4. Durchführung oder Durchquerung nach Anspruch 3, dadurch gekennzeichnet, dass die gemeinsame Achse (A) der zylindrischen Volumen, welche das angelötete Geflecht bzw. die Isolierhülle aufnehmen, mit der Wand einen Winkel (α) von höchstens gleich 15° bilden.

5. Durchführung oder Durchquerung nach einem der vorstehenden Ansprüche, dadurch gekennzeichnet, dass zwei der ersten Deformierungen (4, 5) vorgesehen sind und die Länge ($L_3$, $L_4$) jeder von ihnen im wesentlichen gleich dem Durchmesser des Geflechts ist.

6. Durchführung oder Durchquerung nach einem der vorstehenden Ansprüche, dadurch gekennzeichnet, dass zwei der zweiten Deformierungen (2, 3) vorgesehen sind, welche die Isolierhülle aufnehmen, und dass die Länge ($L_1$, $L_2$) jeder dieser Deformierungen mindestens gleich dem Aussendurchmesser der Isolierhülle (8) ist.

7. Durchführung oder Durchquerung nach einem der Ansprüche 1 bis 6, dadurch gekennzeichnet, dass die Deformierungen Stanzungen sind, welche in die metallische Wand eingeprägt sind.

8. Durchführung oder Durchquerung nach einem der vorstehenden Ansprüche, dadurch gekennzeichnet, dass das Ende der Isolierhülle (8) an einer Deformierung (4) der Wand, worin das metallische Geflecht (9) aufgenommen ist, anstösst.

9. Anwendung der Durchführung oder Durchquerung nach einem der vorstehenden Ansprüche auf die Durchquerung eines Koaxialkabels durch die metallische Abschirmung, welche den Hochfrequenzteil eines Rundfunkempfängers enthält.

## Claims

1. Feed-through or bushing for a coaxial cable (7) through a metallic wall (1), the metallic braid (9) of the cable being electrically connected to the wall, characterized in that the wall comprises deformations (4, 5) defining a substantially cylindrical volume accommodating the braid (9), the latter being soldered to these deformations.

2. Feed-through or bushing according to claim 1, characterized in that the metallic wall (1) comprises other deformations (2, 3) accommodating the insulating enveloppe (8) of the cable adjacent the braid (9) soldered to the deformations (4, 5) accommodating said braid.

3. Feed-through or bushing according to claim 2, characterized in that the deformations (2, 3) of the wall (1) accommodating the insulating enveloppe (8) define a cylindrical volume of the same axis (A) as the volume defined by the deformations (4, 5) accommodating the metallic braid (9).

4. Feed-through or bushing according to claim 3, characterized in that the common axis (A) of the cylindrical volume accommodating the soldered braid and of that accommodating the insulating enveloppe forms an angle (α) with the wall which is at most equal to 15°.

5. Feed-through or bushing according to any of the preceding claims, characterized in that the first deformations (4, 5) are two in number, the length ($L_3$, $L_4$) of each of them being substantially equal to the diameter of the braid.

6. Feed-through or bushing according to any of the preceding claims, characterized in that the second deformations (2, 3) accommodating the insulating enveloppe are two in number and in that the length ($L_1$, $L_2$) of each of these deformations is at least equal to the outer diameter of the insulating enveloppe (8).

7. Feed-through or bushing according to any of claims 1 to 6, characterized in that the deformations are embossed punchings of the metallic wall.

8. Feed-through or bushing according to any of the preceding claims, characterized in that the end of the insulating enveloppe (8) abuts against a deformation (4) of the wall forming the accommodation of the metallic braid (9).

9. Use of the feed-through or bushing according to any of the preceding claims for the passage of a coaxial cable through the metallic screening containing the high frequency part of an electromagnetic wave broadcasting receiver.

## FIG_1

## FIG_3

## FIG_2

## FIG_4

## FIG_5

## FIG_6